# EUROPEAN PATENT APPLICATION

(11) **EP 2 402 292 A2**
(43) Date of publication of application: **04.01.2012**
(21) Application number: 11446503.2
(22) Date of filing: 04.07.2011
(51) Int. Cl.: C02F 1/68, C02F 11/14, C02F 1/00

(54) **Sewage treatment device and method**

(30) Priority: 02.07.2010 SE 1050731
(71) Applicant: Liljedahl Care Concept, 191 38 Sollentuna (SE)
(72) Inventor: Liljedahl, Thomas, 191 38 Sollentuna (SE)
(74) Representative: Estreen, Lars J.F.

(57) **Abstract**

The invention concerns a method and a device for controlling and dosage of precipitation chemicals for chemical precipitation of one or several types of nutrients such as for example phosphorus or nitrogen in sewerages of individual properties with the purpose of preventing under or over dosage of the precipitation chemicals wherein the device comprises a volume comprising a precipitation chemical for transport of a dose precipitation chemical to the outgoing sewage of the property via a pump device that is connected to a control unit comprising a first means for controlling a dosage of the precipitation chemical through the pump device and wherein the control unit further comprises a second means for activation of the dosage of the precipitation chemical to the sewage after receiving impulses from an activation of at least one sensor device in or in connection to the property during a certain predefined time period from the point in time for activation of the sensor device.

## Description

### Technical field

The present invention relates generally to a method and a device for controlling and dosage of precipitation chemicals for chemical precipitation of one or several types of nutrients such as for example phosphorus or nitrogen in sewerages of individual properties with the purpose of preventing under or over dosage of the precipitation chemicals.

### Background art

It is known to treat sewage in sewerages of individual properties through sedimentation of for example phosphorus in the property's individual, or with other properties' common sludge separation well, i.e. consisting of a two- or three chamber well. Such a solution, especially used in small-scale sewage plants for permanent housing properties in rural areas which are not connected to the municipal treatment plant but are equipped with independent solutions for sewage, is described in SE514497. The sedimentation is done by chemical precipitation of the phosphorus and with a device that doses and dilutes the precipitation chemical with water to in proportion to the amount of sewage. A sludge suction vehicle then empties the well of precipitants a required number of times per year. In this way the problems of previous techniques, based on ground infiltration which generated unclear treatment results with respect to the difficulties in measuring efficiency and could implicate storage of great amounts of nutrients in the ground and which continuously required recurring expensive digging and excavation as the ground clogs, are avoided.

In practice, the dosage amount of the precipitation chemical in solutions like the one above based on preprogrammed theoretical data in the control unit, often based on the number of users in a family or a user base, which requires that the control unit is reprogrammed by the installing contractor at changed family relationships. Often the dosage is timer set to pump an estimated amount of precipitation chemical a predefined number of times per day directly to the sewage.

For instance one disadvantage with the above technology is that it does not take into account the fact that the user base is continuously varying and that the dosage thus needs to be regulated more often and more fine-tuned to prevent over-or under dosage of the precipitation chemical, something that in turn can lead to acidification of the environment alternatively that phosphorus is flushed out into the nature and puts a nutrition load on the same when the sewage is directly infiltrated to the ground and ground water. A second problem with today's technology is the great risk of over dosage of the precipitation chemical and thus acidification of the environment since the control unit that controls the dosage needs to be turned off and turned on manually. Forgetting to manually turn off the dosage in for instance a summer residence when the property is closed up and left for the season, or in a permanent housing, before a period of longer absence such as for instance vacation, can thus give negative consequences for the environment, both regarding the surrounding nature and the environment in the sludge separation well itself. A sludge separation well with a too low pH value due to over dosage of the precipitation chemical implicates a significant deterioration of the efficiency in the precipitation process and thus of the treatment efficiency of the sewage treatment device. The above mentioned reasons are also the basis for that previously known technology that reduces the risk for over dosage has not been approved by certain authorizing authorities in properties other than permanent housings.

It is further known to control the dosage of precipitation chemicals for precipitation of phosphorus in industrial waste or large scale sewage treatment such as in larger treatment plants as described in GB2230619.

For instance one disadvantage with the above technology is that it is based on the presence of a continuous sewage flow which implies an increased risk for over dosage if applied directly on small scale sewage plants where this is missing.

### Summary of invention

An object of the present invention is to produce an improved device and method for controlling and dosage of precipitation chemicals in sewage from individual properties for precipitation of at least one type of nutrients such as for example phosphorus or nitrogen. This is solved in one embodiment of the *invention* by means of a sewage treatment device comprising a control unit, which controls the feeding of the precipitation chemical based on impulses from activities in the household of the property which enables dosage during a certain predefined time period. In this way over dosage of precipitation chemicals is prevented and treatment by means of precipitation is enabled in more types of properties, not the least non-permanent housings such as summer houses, holiday cottages etc. Under dosage of the precipitation chemical, for instance due to an increase of the user base number during a limited time period is further avoided due to that the same control unit reads data from the household of the property with respect to the water consumption and controls the dosage based on this.

### Brief description of drawings

The invention is now described, by way of example, with reference to the accompanying drawings, in which:

Fig. 1 shows a property that has been equipped with a device according to the *invention.*

Fig. 2 shows a control unit according to a first embodiment of the *invention.*

Fig. 3 shows a control unit according to a second embodiment of the *invention.*

### Description of embodiments

In the following, a detailed description of embodiments according to the *invention.*

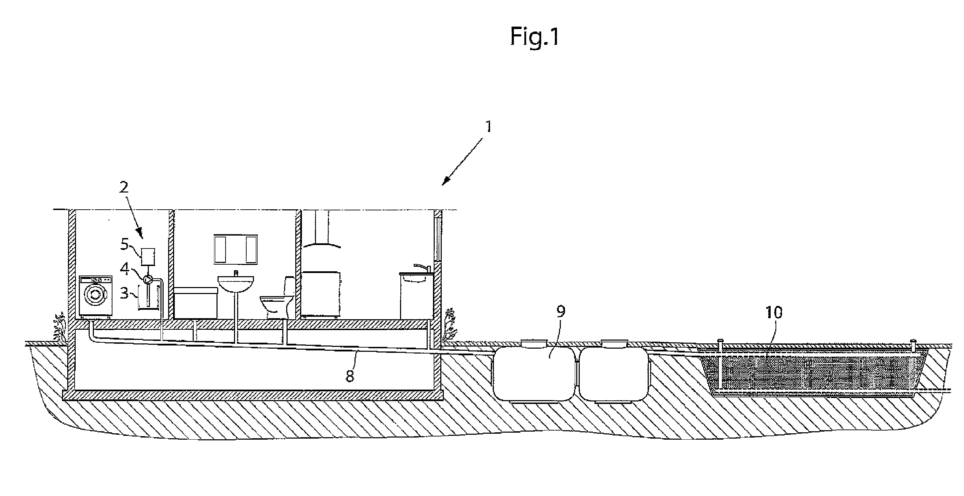

Figure 1 shows a property equipped with a sewage treatment device 2 according to the *invention.* A volume precipitation chemical 3 is arranged in or in connection to the property 1 and connected to a pump device 4, which in turn is connected to or with a control unit 5. It should be understood that the connection also may include that the pump device is integrated with the control unit 5. For treatment of the sewage 8 from a property 2 the precipitation chemical is pumped from the volume 3 and is transported directly to the outgoing sewage 8 of the property, but could also be diluted through being mixed with water from water piping (not shown) before it is transported to the sewage 8. The pump device 4 has the ability to pump small, exact volumes. The dosage of the precipitation chemical is controlled by the control unit 5 that is connected to the pump device 4. The precipitation chemical dose is transported to the outgoing sewage of the property by means of the pumping device. The phosphorus, nitrogen or other types of nutrients based on the choice of precipitation chemical in the sewage is thus precipitated as flock in a sludge separation well 9 and is deposited on the bottom of the well while the treated water is lead on to a recipient 10 such as a lake, watercourse or ground sand filter trench that receives the treated water.

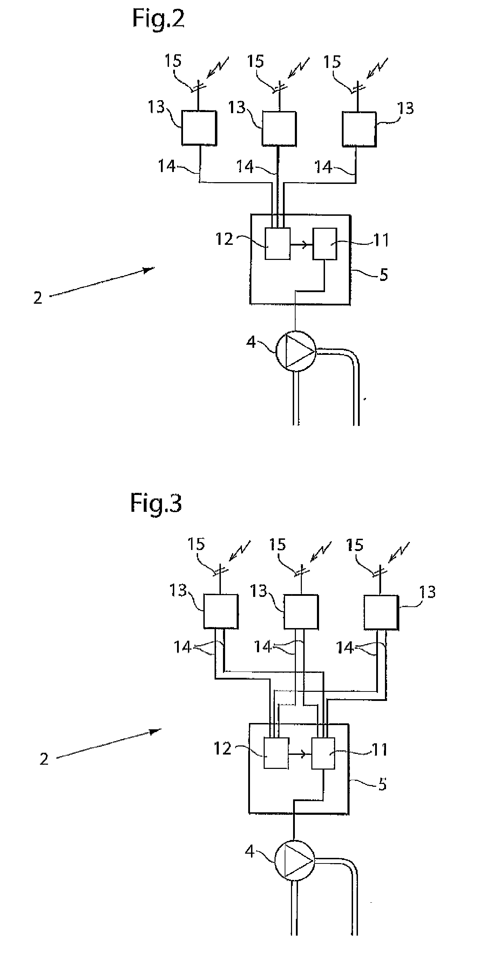

Figure 2 shows a control unit 5 according to a first embodiment of the *invention.* The control unit 5 comprises a first means 11 for controlling and dosage of the precipitation chemical and comprises a memory device where theoretical data, assumptions or historical test data over dosage amounts adapted for for instance different types of households' behavior, family size, or surrounding environment have been programmed and saved. Such data also comprises the cycle time for the dosage, i.e. how often a dosage precipitation chemical shall be pumped from the volume 3 to the sewage. The control unit 5 further exhibits a second means 12 for activation of the dosage of the precipitation chemical to the sewage. The control unit 5 can by means of the second means 12 receive impulses that have been generated by the activation of various sensor devices 13 through activities in the household of the property. The sensor devices 13 are arranged in or in connection to the property and can for example consist of a simple electrical switch connected to a door, such as the front door to the property, that can be activated upon opening. Another example of sensor devices 13 is the water pump which is activated when the water taps or mixers of the property are used. A third type of sensor device 13 could be an arbitrary consumer electronic device or light switches of the household. A forth type of sensor device 13 can be a motion detecting device that senses movements in the household of the property or light detecting devices that senses light in the same. The impulses are sent to the control unit either via cable 14 or wireless transmission 15. The reception of impulses by the control unit 5 assures that the household of the property is inhabited and that a need for sewage treatment exists. Only when the control unit has received these impulses, is the control units pump activated for instance by means of a built-in electric switch in the second means, and a cyclical dosage of the precipitation chemical at certain predefined time intervals, e.g. a daily cycle, in accordance with the preprogrammed data in the first means, is enabled during a predefined time period, e.g. 24 hours since the second means comprises a timer device that closes the electric switch during this time period. After 24 hours the dosage cycle is inactivated unless new activity has taken place in the household that has activated at least one sensor device 13 during this time whereby a new time period is initiated wherein dosage of the precipitation chemical is allowed to take place. By the above described embodiment the purpose of a sewage treatment device that prevents over dosage of a precipitation chemical is achieved.

Fig. 3 shows a control unit according to a second embodiment of the *invention.* The control unit 5 comprises a first means 11 for controlling a dosage of precipitation chemicals comprising for instance a memory device wherein theoretical data, assumptions or historical test data over at least suitable dosage amounts related to a current water consumption in a property is stored. The first means 11 is further adapted to control the dosage of precipitation chemicals to the sewage after receiving of impulses from the activation of at least one sensor device 13 in or in connection to the property 1 that measures the current water consumption in a household in a property and either via cable 14 or wireless transmission 15 is connected for sending impulses to the first means 11. The current water consumption in a household in a property can be measured in a number of ways, but an advantageous method is to measure the water inflow to the property, either in real time or by the measuring the accumulated water inflow during for instance one day at a given point in time per day. Based on these impulses, the first means 11 can control the dosage of the precipitation chemical after comparison with the preprogrammed data in the first means as described above. If the current water consumption is zero in the household, no dosage of the precipitation chemical will take place. The device according to this embodiment can also be combined with the embodiment according to Figure 2, i.e. comprising a second means 12 arranged to receive the impulses from the activation of at least one sensor device 13 in or in connection with the property 1 that measures the current water consumption in a household in a property in such a way that when a water consuming device in the household is used/activated, the dosage of the precipitation chemical according to the first means 11 is also activated for a certain predefined time period from the point in time of usage/activation since the first means 11 simultaneously, or roughly at the same time, is reached by the signals from the activation of this water consuming device. By this embodiment the purpose of a sewage treatment device that prevents under dosage and over dosage of a precipitation chemical is achieved.

## Claims

1. A sewage treatment device for treatment of sewage from a property (2) through precipitation of nutrients in a sludge separation well by means of adding a precipitation chemical, wherein the device comprises a volume comprising a precipitation chemical for transportation of a dose precipitation chemical to the outgoing sewage of the property via a pump device (4) that is connected to a control unit (5) comprising a first means (11) for controlling a dosage of the precipitation chemical through the pump device **characterized in that** the control unit further comprises a second means (12) for activation of the dosage of the precipitation chemical to the sewage after receiving impulses from an activation of at least one sensor device (13) in or in connection to the property during a certain predefined time period from the point in time for activation of the sensor device.

2. A sewage treatment device according to claim 1, **characterized in that** the first means (11) for controlling of the dosage of the precipitation chemical comprises a memory device with preprogrammed data.

3. A sewage treatment device according to claim 1 or 2, **characterized in that** the sensor devices (13) are at least one of the following: a switch connected to a door, a water pump, a light switch or a motion detector.

4. A sewage treatment device according to claim 1, 2 or 3 **characterized in that** the sensor devices (13) are arranged to send impulses to the control unit (5) via cable or wireless transmission.

5. A sewage treatment device according to claim 2, 3 or 4 **characterized in that** the preprogrammed data is at least any of the following; theoretical data, data based on assumptions or test result data.

6. A sewage treatment device according to claim 2 **characterized in that** at least one sensor device (13) is arranged to measure the current water consumption in the property and is arranged for sending out impulses to the first means corresponding to the current water consumption, and wherein the first means based on these impulses is arranged to control the dosage of the precipitation chemical after comparison to the preprogrammed data in the first means.

7. A sewage treatment device for treatment of sewage from a property through precipitation of nutrients in a sludge separation well, wherein the device comprises a volume comprising a precipitation chemical for transport of a dose precipitation chemical to the outgoing sewage of the property via a pump device (4) that is connected to a control unit (5) comprising a first means (11) for controlling a dosage of the precipitation chemical through the pump device **characterized in that** the means comprises a memory device with preprogrammed data and is arranged for receiving impulses from the activation of at least one sensor device (13) in or in connection to the property wherein the at least one sensor device is arranged for measuring the current water consumption in the property and based on the impulses is arranged to control the dosage of the precipitation chemical after comparison to the preprogrammed data in the first means.

8. A method of treating sewage from a property by means of precipitation of nutrients in a sludge separation well using a device comprising a volume comprising a precipitation chemical for transport of a dose precipitation chemical to the outgoing sewage of the property via a pump device that is connected to a control unit comprising a first means for controlling a dosage of the precipitation chemical through the pump device and wherein the control unit further comprises a second means for activation of the dosage of the precipitation chemical to the sewage after receiving impulses from an activation of at least one sensor device in or in connection to the property, comprising the steps:
- activation of at least one sensor device in or in connection to the property
- receiving impulses from the at least one sensor device in the second means for activation of the dosage of the precipitation chemical
- activation, by the second means, of the dosage of the precipitation chemical to the sewage by the first means for controlling a dosage of the precipitation chemical during a certain predefined time period from the point in time of activation of the sensor device.

9. A method of treating sewage from a property by means of precipitation of nutrients in a sludge separation well using a device comprising a volume comprising a precipitation chemical for transport of a dose precipitation chemical to the outgoing sewage of the property via a pump device that is connected to a control unit comprising a first means for controlling a dosage of the precipitation chemical through the pump device after receiving impulses from the activation of at least one sensor device in or in connection to the property wherein the at least one sensor device is arranged for measuring of the current water consumption in the property and wherein the means, based on the impulses, is arranged to control the dosage of the precipitation chemical after comparison to preprogrammed data in the means, comprising the steps:
- activation of at least one sensor device arranged for measuring the current water consumption in or in connection to the property
- sending out impulses from the sensor device to the means corresponding to the current water consumption,
- receiving impulses from the at least one sensor device in the means,
- controlling the dosage of the precipitation chemical to the sewage by the means after comparison to the preprogrammed data in the means.

10. A method of treating sewage from a property according to the claims 8 or 9, **characterized in that** the sensor devices send impulses to the control unit via cable or wireless transmission.
